# FASCICULE DE BREVET EUROPEEN

(11) **EP 0 305 272 B1**
(45) Date de publication et mention de la délivrance du brevet: **10.11.1993**
(21) Numéro de dépôt: 88402110.6
(22) Date de dépôt: 16.08.1988
(51) Int. Cl.: C08F 291/02

(54) **Procédé de fabrication d'une résine thermoplastique résistante au choc**
Verfahren zur Herstellung eines schlagfesten thermoplastischen Harzes
Process for the preparation of an impact-resistant thermoplastic resin

(30) Priorité: 20.08.1987 FR 8711758
(43) Date de publication de la demande: 01.03.1989
(73) Titulaire: ELF ATOCHEM S.A., 92800 Puteaux (FR)
(72) Inventeur: Heim, Philippe, F-68200 Mulhouse (FR); Riess, Gérard, F-68200 Mulhouse (FR)
(74) Mandataire: Chaillot, Geneviève

(56) Documents cités:
- DE-A- 2 524 471
- US-A- 3 862 913
- US-A- 4 141 932
- US-A- 4 336 355

## Description

La présente invention se rapporte à un procédé de fabrication d'une résine thermoplastique résistante au choc, ce procédé comportant une étape de transfert des particules d'un latex de renforcement, dans les monomères de la matrice, à l'aide d'agents ioniques ; elle concerne également les résines thermoplastiques modifiées qui sont obtenues par ce procédé.

Les résines thermoplastiques résistant au choc sont obtenues de façon classique par mélange à chaud de la poudre résultant des étapes de coagulation, déshydratation et séchage d'un latex élastomère, avec les particules de la résine thermoplastique ou polymère "dur", ce qui conduit à ce que l'on appelle un "alliage". Ce procédé n'est satisfaisant ni du point de vue économique, ni du point de vue de la qualité de l'alliage.

Pour surmonter ces inconvénients, on a déjà proposé des procédés dans lesquels les étapes précitées de déshydratation et séchage sont supprimées et où l'on passe directement du stade émulsion du latex élastomère au stade polymérisation de la résine thermoplastique par ajout au latex élastomère d'électrolytes ou d'acides et du (ou des) monomère(s) non saturé(s) devant, après polymérisation, conduire à la matrice thermoplastique. Ces électrolytes ou acides sont des agents qui neutralisent l'effet stabilisant du tensio-actif ionique présent sur le latex élastomère et qui provoquent la floculation de celui-ci. Lorsque le (ou les) monomère(s) est (ou sont) ajouté(s) après l'agent déstabilisant, il y a gonflement plus ou moins rapide par le (ou les) monomère(s) et l'on peut ainsi terminer par une polymérisation en suspension. Lorsque que le (ou les) monomère(s) est (ou sont) ajouté(s) avant l'agent déstabilisant, celui-ci va provoquer le transfert instantané des particules de latex dans le monomère conduisant à une phase organique contenant la dispersion caoutchouteuse polymérisable en suspension ou en masse. De telles techniques sont décrites dans les brevets japonais n° 82-36102, 78-44959, 81-50907, 74-02347, 74-11748, 74-11749, 79-18893, 75-31598, américains n° 4 141 932, 3 450 796 et 3 950 455, et allemand n° 2 524 471.

La demande de brevet allemand DE-A-2 524 471 concerne la préparation d'un interpolymère pour le renforcement choc de matière plastique rigide, et décrit la polymérisation en suspension de chlorure de vinyle en présence d'une émulsion aqueuse de particules d'élastomère acrylique. Un coagulant est généralement ajouté en quantité importante au milieu avant, pendant ou après la mise en oeuvre de la polymérisation en suspension.

Le brevet américain US-A-3 862 913 décrit des polymères renforcés par du caoutchouc préparés par déstabilisation d'un latex de caoutchouc aqueux en présence d'un colloïde protecteur à base de cellulose et de monomère, puis polymérisation du monomère dans des conditions de suspension, le latex pouvant être déstabilisé entre autres par des métaux polyvalents.

Toutefois, ces procédés nécessitent l'emploi de quantités importantes d'agents coagulants. En effet, les exemples du brevet japonais n° 75-31598 montrent que généralement une proportion d'environ 3% en poids de sulfate de magnésium, par rapport a la résine finale, est nécessaire pour déstabiliser le latex. En outre, la polymérisation en suspension s'avère délicate pour une quantité supérieure à 35% en poids par rapport à la résine finale, de particules élastomères comportant un greffage superficiel de polymère "dur" <particules greffées), en raison de la viscosité de la solution de monomère(s) dans laquelle ces particules sont dispersées et gonflées.

En conséquence, des recherches ont été conduites pour proposer un procédé de production de résines thermoplastiques résistant au choc, modifiées par du caoutchouc, qui soit sensiblement exempt des inconvénients mentionnés ci-dessus.

Ce procédé, qui fait l'objet de la présente invention, conduisant à la production d'une résine thermoplastique résistante au choc, modifiée par un latex élastomère, comprend :
(a) une première étape, dans laquelle on prépare un latex élastomère en émulsion aqueuse, en présence d'un agent tensio-actif ionique, d'au moins un monomère éthyléniquement insaturé (pouvant par exemple être choisi parmi les diènes, les diènes substitués, les acrylates d'alkyle et les acrylates d'aralkyle et les oléfines) ; puis
(b) une seconde étape, dans laquelle :
   (b1) on ajoute au latex ainsi obtenu au moins un monomère vinylique, insoluble dans l'eau ou faiblement soluble dans l'eau, choisi parmi les méthacrylates d'alkyle, notamment ceux dont le groupe alkyle comporte de 1 à 4 atomes de carbone, le styrène, les styrènes substitués, l'acrylonitrile, le méthacrylonitrile, et, le cas échéant au moins un monomère copolymérisable à insaturation monoéthylénique; et
   (b2) on neutralise de façon stoechiométrique les charges stabilisatrices ioniques portées par ledit latex en ajoutant au système latex + monomère(s), un agent de transfert portant des charges ioniques opposées à celles du tensio-actif utilisé à l'étape (a), afin de réaliser le transfert des particules dudit latex dans ledit (ou lesdits) monomère(s) vinylique(s), ledit agent de transfert étant un agent tensio-actif ionique de charges opposées à celles de l'agent tensio-actif utilisé à l'étape (a) ou bien un polyanion ou polycation selon le cas, et/ou un latex synthétisé en présence d'un agent tensio-actif de charges opposées à celles du tensio-actif utilisé à l'étape (a) ; et
(c) dans une troisième étape, on effectue la polymérisation en suspension ou en masse de la phase constituée par ledit (ou lesdits) monomère(s) de l'étape (b) et contenant les particules de latex transférées.

De préférence, on choisit les quantités des différents monomères mis en jeu pour que la résine thermoplastique produite contienne de 1 à 90% en poids de composant élastomère.

On décrira maintenant différents modes de réalisation de chacune des étapes du procédé qui vient d'être défini sous son aspect le plus général.

### Etape (a)

Le latex préparé à l'étape (a) est l'agent modificateur destiné à renforcer la matrice thermoplastique rigide. Par ailleurs, il peut avantageusement être choisi de façon à conférer de la transparence à la résine finale.

Parmi les diènes pouvant être utilisés comme monomères, on peut mentionner le butadiène, l'isoprène, le chloroprène et le diméthyl-2,3 butadiène. Parmi les acrylates d'alkyle également utilisables, on peut mentionner ceux qui présentent des groupes alkyle en C₁-C₁₅, avantageusement en C₁-C₈, et, de préférence, en C₂-C₈. En particulier, on peut citer l'acrylate de n-butyle, l'acrylate d'éthyle, l'acrylate d'éthyl-2 hexyle et l'acrylate d'isobutyle. On pourrait également mettre en oeuvre des acrylates d'alkyle dont les groupes alkyle ont une chaîne plus longue. Parmi les acrylates d'aralkyle entrant dans la définition précitée, on peut citer ceux dans lesquels la partie cyclique contient 5, 6 ou 7 atomes de carbone, avec ou sans pont alkyle supplémentaire, et la partie alkyle contient jusqu'à 15 atomes de carbone. Cette liste des acrylates englobe également les acrylates substitués, tels que les acrylates d'alkylthioalkyle (acrylates d'alkylthioéthyle) et les acrylates d'alcoxyalkyle (acrylates de méthoxyéthyle). Parmi les oléfines également utilisables, on peut mentionner notamment l'éthylène, l'isobutylène et les α-oléfines ayant de 3 à 12 atomes de carbone.

Les monomères copolymérisables, que l'on peut également mettre en oeuvre, sont choisis notamment parmi les acrylates et méthacrylates alkyliques inférieurs, les acrylates d'alcoxy inférieurs, l'acrylate de cyanéthyle, l'acrylamide, les acrylates d'hydroxyalkyle inférieurs, les méthacrylates d'hydroxyalkyle inférieurs, l'acide acrylique et l'acide méthacrylique, l'acrylonitrile, le styrène, les styrènes substitués et les méthacrylates alkyliques. On peut citer en particulier le styrène, l'acrylonitrile et le méthacrylate de méthyle.

Comme il est bien connu, lorsque le latex est préparé essentiellement à partir de diènes ou d'acrylates, il est obtenu directement par polymérisation en émulsion de ces monomères. En revanche, lorsque le latex est constitué essentiellement à partir d'oléfines, tel que polyisobutylène, caoutchouc éthylène-propylène ou éthylène-propylène-diène, on prépare d'abord ces polymères par voie cationique ou par catalyse Ziegler-Natta, puis on les dissout dans un solvant, qui est ensuite évaporé après addition d'eau et de tensio-actif.

Par ailleurs, toujours à l'étape (a), on peut ajouter aux monomère(s) mis en oeuvre, au moins un monomère de réticulation, en une quantité allant jusqu'à 20 parties en poids pour 100 parties en poids dudit (ou desdits) monomère(s).

Les monomères de réticulation sont choisis parmi les monomères généralement utilisés dans ce but et notamment parmi les polyméthacrylates et polyacrylates de polyols, comme les diméthacrylates d'alkylène-glycol, tels que le diméthacrylate d'éthylène-glycol, le diméthacrylate de butylène-glycol-1,3 et le diméthacrylate de propylène-glycol, les diacrylates d'alkylène-glycol, tels que le diacrylate d'éthylène-glycol, le diacrylate de butylène-glycol-1,3 ou -1,4, et le triméthacrylate de triméthylolpropane, les polyvinyl-benzènes, tels que le divinyl benzène ou le trivinyl benzène ; l'éthylvinylbenzène ; et l'acrylate et le méthacrylate de vinyle.

Egalement, toujours à l'étape (a), on peut ajouter à (ou aux) monomère(s) mis en oeuvre, au moins un monomère de greffage, en une quantité allant jusqu'à 10 parties en poids, par exemple en une quantité de 0,5 à 10 parties en poids, pour 100 parties en poids dudit (ou desdits) monomère(s). L'utilisation d'au moins un monomère de greffage est préférée notamment dans le cas où les monomères de base sont autres que le butadiène et les butadiènes substitués.

Les monomères de greffage laissent, après la polymérisation, des insaturations résiduelles qui permettront le greffage du polymère formé à l'étape ultérieure, que ce soit à l'étape facultative (a1) décrite plus loin, ou bien à l'étape (b).

Les monomères de greffage sont choisis parmi les monomères généralement utilisés dans ce but, et notamment parmi les esters copolymérisables d'allyle, de méthallyle ou de crotyle d'acides ou diacides carboxyliques à insaturation α, β, comme les esters allylique, méthallylique et crotylique de l'acide acrylique, de l'acide méthacrylique de l'acide maléique (mono- et di-esters), de l'acide fumarique (mono- et di-esters) et de l'acide itaconique (mono- et di-esters); l'éther d'allyle, l'éther de méthallyle et l'éther de crotyle et de vinyle ; le thioéther d'allyle, le thioéther de méthallyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; le phosphonate de 0-allyle, de méthallyle ou de crotyl-O-alkyle, d'aryle, d'alkaryle ou d'aralkyl-P-vinyle, d'allyle ou de méthallyle; le phosphate de triallyle, de triméthallyle ou de tricrotyle; le phosphate de O-vinyle, de O,O-diallyle, de diméthallyle ou de dicrotyle ; les ester cycloalcényliques de l'acide acrylique, de l'acide méthacrylique, de l'acide maléique (mono- et di-esters), de l'acide fumarique (mono-et di-esters), de l'acide itaconique (mono- et di-esters), tels que l'acrylate de 2-, 3- ou 4-cyclohexényle ; les esters bicyclo-(2,2,1)-hept-5-ène-2-yliques de l'acide acrylique, de l'acide méthacrylique, de l'acide maléique (mono- et di-esters), de l'acide fumarique (mono- et di-esters) et de l'acide itaconique (mono- et di-esters) ; les éthers vinyliques et les thio-éthers vinyliques des cycloalcénols et des cycloalcène-thiols, tels que l'éther de vinyle et de cyclohex-4-ène-1-yle, l'éther vinylique de bicyclo-(2,2,1)-hept-5-ène-2-ol ; les esters vinyliques des acides cycloalcène-carboxyliques, tels que l'acide vinylcyclo-hex-3-ène-1-carboxylique et le bicyclo-(2,2,1)-hept-5-ène-2-carboxylate de vinyle.

Parmi les monomères de greffage, on préfère des composés contenant au moins un groupe allyle, en particulier les esters allyliques des acides à insaturation éthylénique. Ceux qu'on préfère le plus sont l'acrylate d'allyle, le méthacrylate d'allyle, le maléate de diallyle, le fumarate de diallyle, l'itaconate de diallyle, le maléate acide d'allyle, le fumarate acide d'allyle et l'itaconate acide d'allyle. On utilise aussi avantageusement les esters diallyliques des acides polycarboxyliques qui ne contiennent pas d'insaturation polymérisable.

Par ailleurs, on fait généralement suivre l'étape (a) par une étape (a1) complémentaire, qui consiste en une polymérisation en émulsion, avec le latex obtenu à l'étape (a), d'au moins un monomère à insaturation monoéthylénique appartenant à la famille des monomères introduits à l'étape (b), des exemples de tels monomères étant donnés ci-après dans l'exposé concernant l'étape (b). Le but est de venir "greffer", à la surface des particules élastomères du latex de l'étape (a), un polymère de compatibilisation avec la résine thermoplastique. Dans ce qui suit, on désignera donc ces monomères par l'expression "monomères de compatibilisation". En outre, les expressions «particules greffées, latex greffé» utilisées ci-après signifient que cette étape (a1) a eu lieu.

Dans le cas où l'on met en oeuvre une étape (a1), il est souhaitable qu'à l'étape (a), on ait utilisé au moins un monomère de greffage, laissant, après polymérisation, des insaturations résiduelles, favorisant le greffage lors de cette étape (a1).

On utilise avantageusement pour la polymérisation de l'étape (a1), un (ou des) monomère(s) de compatibilisation de même nature que celui (ou ceux) utilisé(s) à l'étape (b). Des exemples de tels monomères seront donnés ci-après.

En outre, à cette étape (a1), on utilise avantageusement, pour 100 parties en poids du mélange latex + monomère(s) de compatibilisation, de 99 à 15 parties en poids de la partie solide dudit latex et de 1 à 85 parties en poids dudit (ou desdits) monomère(s) de compatibilisation.

Par ailleurs, toujours à l'étape (a1) on peut ajouter aux monomère(s) mis en oeuvre, au moins un monomère de réticulation, en une quantité allant jusqu'à 5 parties en poids pour 100 parties en poids dudit (desdits) monomère(s). Les monomères de réticulation à utiliser sont les mêmes que ceux indiqués ci-dessus.

On peut également, au cours de l'étape (a1), ajouter au moins un monomère de greffage, tel que précédemment défini.

Les polymérisations en émulsion de ces étapes (a) et (a1), effectuées en présence d'un initiateur de radicaux libres (persulfate, par exemple), ne nécessitent pas de conditions réactionnelles inhabituelles et tous les ingrédients connus de l'homme du métier peuvent être employés.

### Etape (b)

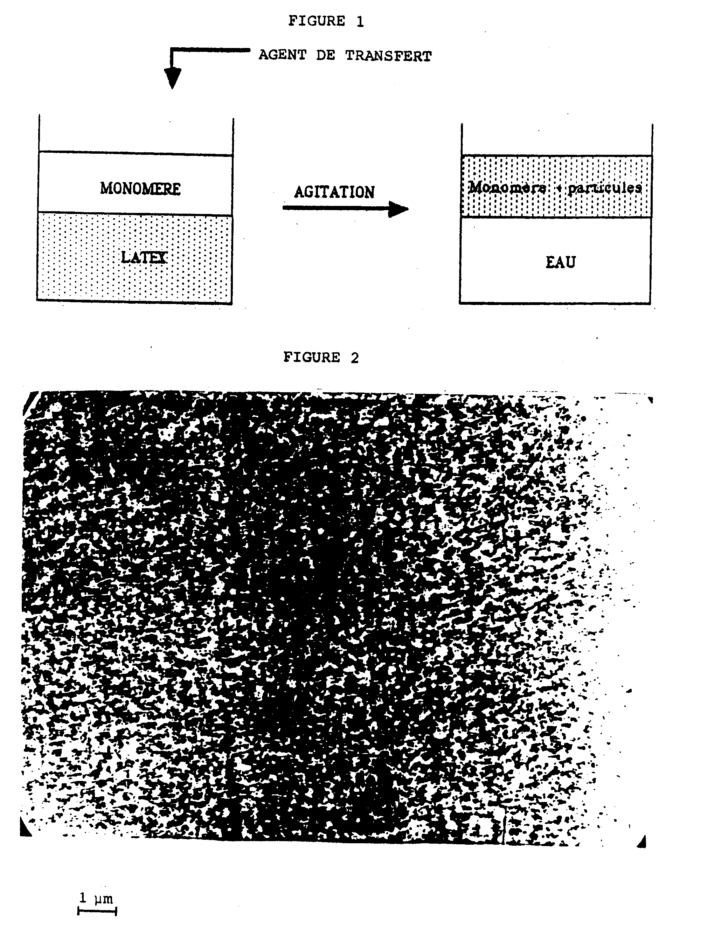

Cette étape constitue l'étape de transfert des particules de latex obtenues à l'étape précédente dans le (ou les) monomère(s) destiné(s) à constituer la matrice. Le principe de ce transfert est schématisé sur la figure 1 :

Le (ou les) monomère(s) est (ou sont) ajouté(s) au latex de polymère élastomère obtenu à la fin de l'étape (a) ou (a1) et le mélange est suffisamment agité. Les particules de latex sont transférées intégralement dans le (ou les) monomère(s) par ajout de l'agent de transfert, lequel déstabilise le latex. On obtient ainsi instantanément une phase organique contenant les particules élastomères, éventuellement greffées, bien dispersées, dans un état gonflé et se séparant de la phase aqueuse, devenue à présent pratiquement limpide.

Parmi les monomères de base mis en oeuvre à cette étape (b), lesquels sont insolubles ou faiblement solubles dans l'eau, on peut mentionner les méthacrylates d'alkyle comme le méthacrylate de méthyle, que l'on préfère, le méthacrylate d'isopropyle, le méthacrylate de butyle secondaire, le méthacrylate de tertio-butyle, le styrène et les styrènes substitués, comme l'α-méthylstyrène, le monochlorostyrène et le tertiobutylstyrène.

Quant aux comonomères à insaturation monoéthylénique que l'on peut introduire à cette étape, on peut citer ceux indiqués ci-dessus pour la préparation du latex de l'étape (a).

A cette étape (b) on utilise généralement au moins 10 parties en poids du (ou des) monomère(s), pour 100 parties en poids de la partie solide du latex obtenu à la fin de l'étape (a) ou (a1).

La quantité d'agent de transfert à ajouter est critique, en ce sens que le transfert est intégral lorsque les charges stabilisatrices ioniques du latex élastomère éventuellement greffé sont stoechiométriquement neutralisées par les charges de signe opposé de l'agent de transfert.

Comme agent de transfert, on peut utiliser un agent tensio-actif ionique, de charges opposées à celles de l'agent tensio-actif utilisé à l'étape (a), ou bien un polyanion ou polycation selon le cas, et/ou un latex synthétisé en présence d'un agent tensio-actif de charges opposées à celles du tensio-actif utilisé à l'étape (a).
· Lorsqu'on utilise un agent tensio-actif cationique comme agent de transfert, on choisit celui-ci parmi les sels d'onium (ammonium, phosphonium ou pyridinium) quaternaires avec un substituant hydrophobant, tel qu'un reste alkyle à longue chaîne. On peut également utiliser des sels d'onium quaternaires à substituant stériquement encombrant, tels que le bleu de méthylène et l'acétate de cyclohexylamine.
· Lorsqu'on utilise un polycation comme agent de transfert, on le choisit parmi ceux dérivant des poly(vinylpyridines) quaternisées, des poly(vinylbenzylamines) quaternisées, des celluloses quaternisées, des polyalcools vinyliques quaternisés, des poly(méthacrylates d'alkyle) quaternisés.

Lorsqu'on utilise un latex comme agent de transfert, ledit latex est obtenu, de préférence, à partir de monomères de même nature que ceux utilisés à l'étape (b).

Le transfert de l'étape (b) est généralement effectué à une température allant de 0°C à environ 100°C. Toutefois, la température n'est pas un facteur déterminant dans cette étape.

Dans la phase organique obtenue en fin d'étape (b), les particules d'élastomère éventuellement greffé sont dans un état individuel, gonflé, et elles ne sont pas réunies par fusion. La viscosité de cette phase organique, contenant les particules transférées, dépend de la quantité de particules transférées et, surtout, de leur indice de gonflement Hᵥ. Hᵥ est défini par le rapport du volume du polymère gonflé dans le(s) monomère(s) de l'étape (b) sur le volume du polymère sec.

Dans le domaine indiqué ci-dessus des teneurs en composant caoutchouteux de la résine thermoplastique obtenue par le procédé selon la présente invention, il existe un intervalle dont les concentrations limites sont c₁ et c₂ (avec c₁< c₂), exprimées en poids de particules transférées pour 100 parties en poids de résine finale, et qui dépend de l'indice de gonflement Hᵥ et de la morphologie des particules de composant caoutchouteux, de préférence greffé.

Entre ces concentrations limites, le caractère visco-élastique de la phase organique contenant ces particules transférées est tel qu'il est difficile de la disperser directement à l'aide d'agents dispersants en vue d'une polymérisation en suspension. A titre indicatif, on peut mentionner que, dans le cas des expériences menées par les présents inventeurs, la valeur minimale c₁ obtenue était voisine de 35% en poids et la valeur maximale c₂ était voisine de 50% en poids. Par ailleurs, lorsque Hᵥ augmente, c₁ diminue. Pour des concentrations inférieures à c₁ ou supérieures à c₂, la phase organique est facilement dispersable ; pour des concentrations intermédiaires entre c₁ et c₂, on peut cependant assurer la dispersion aisée de la phase organique en ayant recours, de préférence, à un agent de transfert du type latex.
(1) Quand la partie solide du latex obtenu à la fin de l'étape (a) ou de l'étape (a1) est inférieure à c₁, la solution de monomère(s) dans laquelle le latex est dispersé, est un fluide plus ou moins visqueux qu'il est possible de polymériser en masse ou de disperser à l'aide d'un agent dispersant classique, en vue d'une polymérisation en suspension à l'étape (c). Comme agent dispersant, on peut utiliser notamment l'hydroxyéthylcellulose, la méthylcellulose, le polyacrylamide, la carboxyméthylcellulose, l'alcool polyvinylique, les gélatines, les alginates hydrosolubles, les copolymères d'acide(s) (méth)acryliques et de méthacrylate de méthyle, les copolymères contenant des motifs hydrophobes et hydrophiles en général, l'agent dispersant préféré étant le polyalcool vinylique. Les agents dispersants sont, en général, employés en solution aqueuse, à raison de 0,05 à 3% en poids par rapport à la résine finale.
(2) Quand la partie solide du latex obtenu à la fin de l'étape (a) ou (a1) est supérieures à c₂, la phase organique contenant les particules de latex transférées est autodispersée, lors du transfert, en grumeaux caoutchouteux non collants (de dimension comprise entre 50 µm et 1,5 mm). Par ailleurs, il est préférable d'ajouter, en même temps que l'agent de transfert, un agent dispersant classique (utilisé habituellement dans les polymérisations en suspension). Dans ce cas, une polymérisation en suspension va de soi. Des exemples d'agents de dispersion ont été mentionnés ci-dessus dans le paragraphe (1). En outre, les agents dispersants sont employés dans les mêmes quantités que celles indiquées dans ce paragraphe.
(3) L'obtention d'un alliage résistant au choc par polymérisation en suspension et contenant un taux de particules élastomères éventuellement greffées compris en c₁ et c₂, est plus délicate, car à ces concentrations intermédiaires de particules élastomères tranférées, la consistance de la phase du (ou des) monomère(s) contenant ces particules dispersées est pâteuse et collante, difficilement dispersible de manière classique en perles, en vue d'une polymérisation en suspension à l'étape (c).
   On peut y pallier en ajoutant, comme agent de transfert non pas un tensio-actif ionique classique, mais un latex, de préférence non réticulé, stabilisé à l'aide d'un tel tensio-actif.
   Ce latex ionique (qui sera transféré en même temps que le latex ionique de l'étape (a) ou (a1)) a pour but d'augmenter la viscosité de la phase organique contenant les particules transférées en vue d'atteindre une valeur de viscosité au moins aussi importante que si l'on transférait un taux supérieur à c₂ de particules élastomères greffées (cas précédent), valeur de viscosité au-dessus de laquelle le mélange du (ou des) monomère(s) contenant les particules transférées est auto-dispersant sous l'action de l'agitation et d'un agent de dispersion classique. On obtient ainsi une fine dispersion (diamètre 50-300 µm) de monomère(s) contenant les particules de polymère de l'étape (a) ou (a1) ainsi que le polymère soluble du latex ionique transféreur, qu'il est possible de polymériser en suspension. La polymérisation en suspension finale sera plus rapide, vu qu'il y aura moins de monomère(s) à polymériser.
   Afin que le transfert soit quantitatif, il faut que le nombre de charges ioniques présentes dans le latex transféreur soit égal au nombre de charges ioniques, de signe opposé, portées par le latex à transférer.
   Il est également possible dans ce cas d'utiliser comme agent de transfert, un mélange latex ionique + tensio-actif ionique (latex et tensio-actif cationiques si le tensio-actif présent sur le latex de l'étape (a) est anionique).

Quand le transfert de l'étape (b) a eu lieu, il est naturellement encore possible de régler le rapport en poids résine thermoplastique finale/élastomère éventuellement greffé, en diluant la phase organique avec du (ou des) monomère(s) devant servir à constituer ladite résine.

### Etape (c)

L'étape (c) du procédé selon l'invention est la polymérisation en suspension ou en masse. De telles polymérisations s'effectuent dans les conditions connues d'agitation, de température et de temps de réaction.
· Dans le cas d'une polymérisation en suspension, la dispersion, obtenue à l'issue de l'étape (b), est chauffée, de préférence, entre 60 et 100°C, pendant un temps suffisant pour obtenir une polymérisation complète des monomères, à une vitesse d'agitation de l'ordre de 300-400 t/mn, sous atmosphère d'azote. Les temps de polymérisation sont dépendants du taux de composant caoutchouteux présent et sont généralement de l'ordre de 3 à 5 heures. Le rapport phase dispersé/phase aqueuse est généralement compris entre 0,1 et 1,5. Par ailleurs, on peut ajouter, au cours de la polymérisation, des agents dispersants (comme indiqué ci-dessus) et des sels minéraux, afin d'obtenir une taille de perles idéale (environ 200-300 µm). La réaction achevée, le réacteur est vidé, puis, après décantation, lavages et séchage, on récupère la résine thermoplastique renforcée sous forme de perles.
· Dans le cas d'une polymérisation en masse, il est nécessaire de séparer l'eau par décantation et centrifugation à l'issue de l'étape (b). La polymérisation est généralement réalisée à une température allant de 50 à 200°C.

Pour mieux illustrer l'objet de l'invention, on va en décrire maintenant, sous formes d'exemples purement illustratifs et non limitatifs, plusieurs modes de mise en oeuvre.

### Exemple 1

Cet exemple concerne la préparation d'un alliage du type poly(méthacrylate de méthyle) choc, contenant 19% en poids d'un polymère élastomère greffé.

### Etape (a) : Préparation d'un latex de copolymère acrylate de butyle-styrène par copolymérisation en émulsion.

Les matières utilisées dans cette polymérisation sont les suivantes :

| Matières | Quantités introduites (parties en poids) |
|---|---|
| Acrylate de butyle | 78,5 |
| Styrène | 21,5 |
| Laurylsulfate de sodium | 0,63 |
| Diméthacrylate d'éthylène-glycol (monomère de réticulation) | 4,2 |
| Persulfate de potassium | 0,42 |
| Eau désionisée | 314 |

Dans un récipient de réaction en verre, pourvu d'un agitateur, on mélange l'eau et le laurylsulfate de sodium et on porte le mélange obtenu à 70°C. On ajoute l'acrylate de butyle, le styrène et le monomère de réticulation, puis le persulfate de potassium en solution aqueuse. On agite le mélange résultant à une vitesse de l'ordre de 250 tours/minute en maintenant la température à 70°C. La durée de la polymérisation est fixée à 4 heures. Le latex obtenu présente un extrait sec de 24,8% en poids, un diamètre moyen des particules de 72 nm, et un indice de gonflement dans le méthacrylate de méthyle de 3,9.

### Etape (a1) : Greffage de poly(méthacrylate de méthyle) sur le latex obtenu à l'étape (a)

Les matières utilisées dans cette polymérisation avec greffage sont les suivantes :

| Matières | Quantités introduites (parties en poids) |
|---|---|
| Latex obtenu à l'étape (a) | 49,6 (partie solide) |
| Méthacrylate de méthyle | 45 |
| Persulfate de potassium | 0,2 |
| Eau désionisée présente | 300 |
| Diméthacrylate d'éthylène-glycol | 1,4 |

On réalise cette polymérisation dans un récipient de réaction en verre, pourvu d'un agitateur, sous atmosphère d'azote, à 70°C, pendant 3 heures.

Le taux de polymerisation est de 99,9%. Le latex acrylique greffé obtenu présente un extrait sec de 23,8% et un diamètre moyen des particules de 86,5 nm.

### Etape (b) : Transfert des particules du latex acrylique greffé obtenu à l'étape (a1) dans du méthacrylate de méthyle

A 100 parties en poids du latex obtenu à l'étape (a1), on ajoute 100 parties en poids de méthacrylate de méthyle, 0,375 partie en poids de peroxyde de lauryle et 0,375 partie en poids de lauryl-mercaptan, et on agite le mélange résultant.

Ensuite, on ajoute 0,16 partie en poids de chlorure d'hexadécyltriméthylammonium dans 40 parties d'eau, puis, au bout d'une minute, un mélange constitué par 0,075 partie en poids d'un copolymère méthacrylate de méthyle-acide acrylique, 0,75 partie en poids de phosphate disodique et 14,2 parties en poids d'eau.

### Etape (c) : Polymérisation de la phase organique du système obtenu à l'étape (b)

On effectue cette polymérisation pendant environ 2 heures à 70°C, puis pendant 1 heure à 90°C. On récupère ensuite les perles et on les traite de la manière habituelle.

Ensuite, on moule ces perles sous une pression de 200 bars et a 180°C, afin d'obtenir une plaquette. Celle-ci est transparente et résistante aux chocs.

Une coupe extrêmement mince de résine a été observée au microscope électronique, la photographie résultante étant présentée sur la figure 2 (grossissement 10 000). On constate que les particules élastomères sont bien dispersées et ne présentent pas d'occlusions.

### Exemple 2

Cet exemple concerne la préparation d'un alliage de type copolymère acrylonitrile-styrène, contenant 59,6% en poids de polymère caoutchouteux greffé.

### Etape (a) : Préparation d'un latex de polybutadiène

Les matières utilisées dans cette polymérisation sont les suivantes :

| Matières | Quantités introduites (parties en poids) |
|---|---|
| Butadiène | 100 |
| Laurate de potassium | 0,9 |
| Persulfate de potassium | 0,4 |
| Eau désionisée | 220 |
| Hydroxyde de potassium | 0,2 |

Dans un récipient de réaction en verre, pourvu d'un agitateur, on introduit l'eau, le laurate de potassium et l'hydroxyde de potassium, et on porte le mélange à 70°C. Ensuite, on ajoute le butadiène, puis le persulfate de potassium en solution aqueuse. On agite le mélange à une vitesse de l'ordre de 250 tours/minute, en maintenant la température de 70°C. La polymérisation s'effectue en l'espace de 6 heures. On obtient un latex de polybutadiène présentant un diamètre de particules de 90 nm et un extrait sec de 31%.

### Etape (a1) : Greffage d'un copolymère acrylonitrilestyrène sur le latex obtenu à l'étape (a)

Les matières utilisées pour ce greffage sont les suivantes :

| Matières | Quantités introduites (parties en poids) |
|---|---|
| Latex obtenu à l'étape (a) | 14,5 (partie solide) |
| Styrène | 9,1 |
| Acrylonitrile | 2,9 |
| Persulfate de potassium | 0,1 |
| Eau distillée présente | 73,4 |

On effectue cette polymérisation sous un courant d'azote, pendant 5 heures, à 70°C. Le latex obtenu a un diamètre moyen des particules de 110 nm et il présente un extrait sec de 26,6%.

### Etape (b) : Transfert des particules du latex de polybutadiène greffé obtenu à l'étape (a1) dans un mélange de styrène et d'acrylonitrile

A 240 parties en poids du latex obtenu à l'étape (a1), on ajoute 32,4 parties en poids de styrène, 10,3 parties en poids d'acrylonitrile, 0,2 partie en poids de laurylmercaptan et 0,3 partie en poids de peroxyde de lauroyle. On agite le mélange, puis on y ajoute un mélange constitué par 0,333 partie en poids de bromure de lauryléthyldiméthylammonium, 0,12 partie en poids de l'alcool polyvinylique commercialisé sous la dénomination "RHODOVIOL 135", et 148 parties en poids d'eau. On obtient, au bout de quelques secondes d'agitation, une dispersion stable de perles d'un diamètre d'environ 500 µm à 1 mm.

### Etape (c) : Polymérisation en suspension de la phase organique du système obtenu à l'étape (b)

On polymérise en suspension, pendant 10 heures, à 60°C, la dispersion obtenue à l'étape (b). Les perles obtenues sont ensuite récupérées et traitées de façon classique.

### Exemple 3

Cet exemple concerne la préparation d'un alliage de type poly(méthacrylate de méthyle) choc, contenant 54,6% en poids de particules de polymère élastomère greffé.

### Etape (a) : Préparation d'un latex de copolymère acrylate de butyle-styrène par copolymérisation en émulsion.

Les matières utilisées dans cette polymérisation sont les suivantes :

| Matières | Quantités introduites (parties en poids) |
|---|---|
| Acrylate de butyle | 80,7 |
| Styrène | 19,3 |
| Laurylsufate de sodium | 0,31 |
| Divinylbenzène (monomère de réticulation) | 1,6 |
| Persulfate de potassium | 0,62 |
| Eau désionisée | 375 |

Dans un récipient en verre, pourvu d'un agitateur, on mélange l'eau et le laurylsulfate de sodium, et on porte le mélange à 70°C. On ajoute 50% en poids du mélange de monomères, puis 67% en poids de la quantité de persulfate de potassium en solution aqueuse. On agite le mélange résultant à une vitesse de l'ordre de 250 t/mn en maintenant la température à 70°C pendant 3 heures. On ajoute ensuite les 33% de persulfate de potassium restants, puis on coule en continu les 50% de mélange de monomères restants à la vitesse de 20 ml/heure. La durée de polymérisation est fixée à 6 heures. Le latex obtenu présente un extrait sec de 21,4% en poids, un diamètre moyen des particules de 148 nm, et un indice de gonflement dans le méthacrylate de méthyle de 5,2.

### Etape (a1) : Greffage de poly(méthacrylate de méthyle) sur le latex obtenu à l'étape (a)

Les matières utilisées dans cette polymérisation avec greffage sont les suivantes :

| Matières | Quantités introduites (parties en poids) |
|---|---|
| Latex obtenu à l'étape (a) | 74,9 (partie solide) |
| Méthacrylate de méthyle | 18,9 |
| Persulfate de potassium | 0,2 |
| Eau désionisée présente | 294 |
| Divinylbenzène | 0,06 |

On effectue la polymérisation à 70°C, pendant 3 heures. Le latex acrylique greffé obtenu présente un extrait sec de 24,3% et un diamètre moyen des particules de 158,5 nm.

### Etape (b): Transfert des particules du latex acrylique greffé obtenu à l'étape (a1) dans du méthacrylate de méthyle

A 200 parties en poids du latex obtenu à l'étape (a1), on ajoute 40 parties en poids de méthacrylate de méthyle, 0,2 partie de laurylmercaptan et 0,2 partie en poids de peroxyde de lauroyle, et on agite le mélange résultant.

Ensuite, on y ajoute un mélange constitué par 0,2 partie en poids de bromure de lauryléthyldiméthylammonium, 0,12 partie en poids d'alcool polyvinylique commercialisé sous la dénomination "RHODOVIOL 135", et 160 parties en poids d'eau distillée. On obtient, au bout de quelques secondes d'agitation vigoureuse, une dispersion stable de perles présentant un diamètre d'environ 100-400 µm.

### Etape (c) : Polymérisation en suspension de la phase organique du système obtenu à l'étape (b)

On réalise cette polymérisation en suspension à une température de 70°C, pendant 5 heures. Les perles sont récupérées et traitées de façon classique.

### Exemple 4 :

Cet exemple concerne la préparation d'un alliage de type poly(méthacrylate de méthyle) choc, contenant 42,3% en poids de polymère élastomère greffé à l'aide de la technique de transfert de phase par un latex de poly(méthacrylate de méthyle) cationique.

### Etape (a) : Préparation d'un latex de copolymère acrylate de butyle-styrène par copolymérisation en émulsion.

Les matières utilisées dans cette polymérisation sont les suivantes :

| Matières | Quantités introduites (parties en poids) |
|---|---|
| Acrylate de butyle | 80,7 |
| Styrène | 19,3 |
| Laurylsufate de sodium | 0,34 |
| Méthacrylate d'allyle (monomère de greffage) | 3,4 |
| Persulfate de potassium | 0,46 |
| Eau désionisée | 393 |

On procède comme à l'étape (a) de l'Exemple 1, de façon à obtenir un latex qui présente un extrait sec de 20,8% en poids, un diamètre moyen des particules de 170 nm, et un indice de gonflement dans le méthacrylate de méthyle de 2,3.

### Etape (a1) : Greffage de poly(méthacrylate de méthyle) sur le latex obtenu à l'étape (a)

Les matières utilisées dans ce greffage sont les suivantes :

| Matières | Quantités introduites (parties en poids) |
|---|---|
| Latex obtenu à l'étape (a) | 83,2 (partie solide) |
| Methacrylate de méthyle | 17,5 |
| Persulfate de potassium | 0,2 |
| Eau distillée présente | 331 |

On effectue la polymérisation à 70°C, pendant 3 heures, de façon à obtenir un latex qui présente un extrait sec de 23,3% et un diamètre moyen des particules de 180 nm.

### Etape (b) : Transfert des particules du latex acrylique greffé obtenu à l'étape (a1) dans du méthacrylate de méthyle

Cette étape consiste à transférer les particules anioniques du latex acrylique greffé obtenu à l'étape (a1) dans le méthacrylate de méthyle à l'aide de particules cationiques de polyméthacrylate de méthyle synthétisées en émulsion, dont la préparation est décrite ci-après :

### Préparation des particules cationiques du poly(méthacrylate de méthyle)

Les matières utilisées dans cette préparation sont les suivantes :

| Matières | Quantités introduites (parties en poids) |
|---|---|
| Methacrylate de méthyle | 100 |
| Laurylmercaptan | 0,3 |
| Bromure de cétyltriméthylammonium | 1,13 |
| Eau distillée | 365 |
| Persulfate de potassium | 0,4 |

On effectue cette polymérisation à 70°C, pendant 2 heures, de façon à obtenir un latex présentant un extrait sec de 21,6% et un diamètre moyen des particules de 112 nm.

Les matières utilisées sont les suivantes :

| Matières | Quantités introduites (parties en poids) |
|---|---|
| Latex de poly(méthacrylate de méthyle) cationique tel qu'obtenu ci-dessus | 21,6 exprimé en (partie solide) |
| Latex élastomère greffé obtenu à l'étape (a1) | 35,9 exprimé en (partie solide) |
| Alcool polyvinylique commercialisé sous la dénomination "RHODOVIOL 135" | 0,1 |
| Phosphate disodique | 0,5 |
| Méthacrylate de méthyle | 27 |
| Peroxyde de lauroyle | 0,2 |
| Laurylmercaptan | 0,2 |
| Eau distillée présente | 281 |

On ajoute en une seule fois le latex élastomère greffé obtenu à l'étape (a1) dans un mélange constitué par le latex de poly(méthacrylate de méthyle) cationique, l'alcool polyvinylique et le méthacrylate de méthyle contenant le peroxyde de lauroyle et le laurylmercaptan, ce mélange étant agité vigoureusement.

On obtient un mélange épais que l'on fluidifié en y ajoutant le phosphate disodique en solution aqueuse. La dispersion de grains de monomère contenant les particules d'élastomère greffé et de poly(méthacrylate de méthyle) utilisées en tant qu'agent de transfert a une taille voisine de 200µm.

### Etape (c) : Polymérisation en suspension de la dispersion de l'étape (b)

On polymérise en suspension la dispersion obtenue à l'étape (b), à une température de 70°C, pendant 6 heures. Les perles sont récupérées et traitées de façon classique.

## Revendications

1. Procédé de fabrication d'une résine thermoplastique résistante au choc, modifiée par un latex élastomère, comprenant :
(a) une première étape, dans laquelle on prépare un latex élastomère en émulsion aqueuse, en présence d'un agent tensio-actif ionique, d'au moins un monomère éthyléniquement insaturé ;
(b) une seconde étape dans laquelle
b1) on ajoute au latex ainsi obtenu au moins un monomère vinylique, insoluble dans l'eau ou faiblement soluble dans l'eau, choisi parmi les méthacrylates d'alkyle, le styrène et les styrènes substitués, l'acrylonitrile et le méthacrylonitrile, et, le cas échéant, au moins un monomère copolymérisable à insaturation monoéthylénique; et
b2) on neutralise de façon stoechiométrique les charges stabilisatrices ioniques portées par ledit latex, en ajoutant au système latex + monomère(s), un agent de transfert portant des charges ioniques opposées à celles du tensio-actif utilisé à l'étape (a) afin de réaliser le transfert des particules dudit latex dans ledit (ou lesdits) monomère(s) vinylique(s), ledit agent de transfert étant un agent tensio-actif ionique de charges opposées à celles de l'agent tensio-actif utilisé à l'étape (a) ou bien un polyanion ou polycation selon le cas, et/ou un latex synthétisé en présence d'un agent tensio-actif de charges opposées à celles du tensio-actif utilisé à l'étape (a) ; et
(c) dans une troisième étape, on effectue la polymérisation en suspension ou en masse de la phase constituée par ledit (ou lesdits) monomère(s) de l'étape (b) contenant les particules de latex transférées.

2. Procédé selon la revendication 1, caractérisé par le fait qu'on choisit les quantités des différents monomères mis en jeu pour que la résine thermoplastique produite contienne de 1 à 90% en poids de composant élastomère.

3. Procédé selon l'une des revendications 1 et 2, caractérisé par le fait qu'on fait suivre l'étape (a) par une étape complémentaire (a1), consistant en une polymérisation en émulsion, avec le latex obtenu à l'étape (a), d'au moins un monomère à insaturation monoéthylénique, dit monomère de compatibilisation, appartenant à la famille des monomères introduits à l'étape (b).

4. Procédé selon la revendication 3, caractérisé par le fait que, pour la polymérisation de l'étape (a1), on utilise un (ou des) monomère(s) de compatibilisation de même nature que celui (ou ceux) utilisé(s) à l'étape (b).

5. Procédé selon l'une des revendications 3 et 4, caractérisé par le fait qu'à l'étape (a1), on utilise, pour 100 parties en poids du mélange latex + monomère(s) de compatibilisation, de 99 à 15 parties en poids de la partie solide dudit latex et de 1 à 85 parties en poids dudit (ou desdits) monomère(s) de compatibilisation.

6. Procédé selon l'une des revendications 1 à 5, caractérisé par le fait qu'à l'étape (a) et/ou à l'étape (a1), on ajoute au(x) monomère(s) mis en oeuvre, un monomère de greffage en une quantité allant jusqu'à 10 parties en poids, pour 100 parties en poids dudit (ou desdits) monomère(s).

7. Procédé selon l'une des revendications 1 à 6, caractérisé par le fait qu'à l'étape (a), on ajoute au(x) monomère(s), au moins un monomère de réticulation, en une quantité allant jusqu'à 20 parties en poids pour 100 parties en poids dudit (ou desdits) monomère(s), et, le cas échéant à l'étape (a1), si par ailleurs une telle étape est prévue, on ajoute au(x) monomère(s) introduit(s) à cette étape au moins un monomère de réticulation en une quantité allant jusqu'à 5 parties en poids pour 100 parties en poids dudit (ou desdits) monomère(s) introduit(s) à cette étape.

8. Procédé selon l'une des revendications 1 à 7, caractérisé par le fait qu'à l'étape (b), on introduit au moins 10 parties en poids du (ou des) monomère(s) pour 100 parties en poids de la partie solide du latex obtenu à la fin de l'étape (a) ou (a1).

9. Procédé selon l'une des revendications 1 à 8, caractérisé par le fait que, lorsqu'on utilise un agent tensio-actif cationique comme agent de transfert, on choisit celui-ci parmi les sels d'onium quaternaires avec un substituant hydrophobant ou les sels d'onium à substituant stériquement encombrant, et lorsqu'on utilise un polycation comme agent de transfert, on le choisit parmi ceux dérivant des poly(vinylpyridines) quaternisées, des poly(vinylbenzylamines) quaternisées, des celluloses quaternisées, des polyalcools vinyliques quaternisés, des poly(méthacrylates d'alkyle) quaternisés.

10. Procédé selon l'une des revendications 1 à 8, caractérisé par le fait qu'on utilise un latex comme agent de transfert, ledit latex étant obtenu à partir de monomères de même nature que ceux utilisés à l'étape (b).

11. Procédé selon l'une des revendications 1 à 10, caractérisé par le fait qu'à l'étape (b), on disperse le monomère contenant les particules transférées à l'aide d'un agent dispersant, en vue d'une polymérisation en suspension à l'étape (c).

12. Procédé selon l'une des revendications 1 à 11, caractérisé par le fait qu'on réalise le transfert de l'étape (b) à une température allant de 0 à 100°C.

## Claims

1. Process for the manufacture of an impact-resistant thermoplastic resin modified by an elastomeric latex, comprising:
(a) a first stage in which an elastomeric latex is prepared in aqueous emulsion in the presence of an ionic surface-active agent, from at least one ethylenically unsaturated monomer;
(b) a second stage in which
b1) at least one vinyl monomer, insoluble in water or poorly soluble in water, chosen from alkyl methacrylates, styrene and substituted styrenes, acrylonitrile and methacrylonitrile and, if appropriate, at least one copolymerisable monomer containing monoethylenic unsaturation are added to the latex thus obtained; and
b2) the ionic stabilising charges carried by the said latex are neutralised stoichiometrically by adding to the latex + monomer(s) system a transfer agent carrying ionic charges opposite to those of the surfactant employed in stage (a) in order to carry out the transfer of the particles of the said latex into the said vinyl monomer(s), the said transfer agent being an ionic surface-active agent with charges opposite to those of the surface-active agent employed in stage (a) or else a polyanion or polycation, according to circumstances, and/or a latex synthesised in the presence of a surface-active agent with charges opposite to those of the surfactant employed in stage (a); and
(c) in a third stage the suspension or bulk polymerisation of the phase consisting of the said monomer(s) of stage (b), containing the transferred latex particles, is performed.

2. Process according to Claim 1, characterised in that the quantities of the various monomers used are chosen so that the thermoplastic resin produced should contain from 1 to 90 % by weight of elastomeric component.

3. Process according to either of Claims 1 and 2, characterised in that stage (a) is followed by an additional stage (a1) consisting in an emulsion polymerisation, with the latex obtained in stage (a), of at least one monomer containing monoethylenic unsaturation, called compatibilising monomer, belonging to the class of the monomers which are introduced in stage (b).

4. Process according to Claim 3, characterised in that, for the polymerisation of stage (a1), one or more compatibilising monomer(s) of the same kind as that (or those) employed in stage (b) is (are) employed.

5. Process according to either of Claims 3 and 4, characterised in that, in stage (a1), use is made, per 100 parts by weight of the latex + compatibilising monomer(s) mixture, of 99 to 15 parts by weight of the solid part of the said latex and of 1 to 85 parts by weight of the said compatibilising monomer(s).

6. Process according to one of Claims 1 to 5, characterised in that, in stage (a) and/or in stage (a1), a grafting monomer is added to the monomer(s) used, in a quantity ranging up to 10 parts by weight per 100 parts by weight of the said monomer(s).

7. Process according to one of Claims 1 to 6, characterised in that, in stage (a), at least one crosslinking monomer is added to the monomer(s), in a quantity ranging up to 20 parts by weight per 100 parts by weight of the said monomer(s) and, if appropriate in stage (a1), if furthermore such a stage is envisaged, at least one crosslinking monomer is added to the monomer(s) introduced in this stage, in a quantity ranging up to 5 parts by weight per 100 parts by weight of the said monomer(s) introduced in this stage.

8. Process according to one of Claims 1 to 7, characterised in that, in stage (b), at least 10 parts by weight of the monomer(s) are introduced per 100 parts by weight of the solid part of the latex obtained at the end of stage (a) or (a1).

9. Process according to one of Claims 1 to 8, characterised in that, when a cationic surface-active agent is employed as transfer agent, the latter is chosen from quaternary onium salts with a hydrophobant substituent or onium salts containing a sterically hindering substituent and, when a polycation is employed as transfer agent, it is chosen from those derived from quaternised poly(vinylpyridines), quaternised poly(vinylbenzylamines), quaternised celluloses, quaternised polyvinyl alcohols and quaternised poly(alkyl methacrylates).

10. Process according to one of Claims 1 to 8, characterised in that a latex is employed as transfer agent, the said latex being obtained from monomers of the same kind as those employed in stage (b).

11. Process according to one of Claims 1 to 10, characterised in that, in stage (b), the monomer containing the transferred particles is dispersed with the aid of a dispersing agent with a view to a suspension polymerisation in stage (c).

12. Process according to one of Claims 1 to 11, characterised in that the transfer in stage (b) is carried out at a temperature ranging from 0 to 100°C.

## Patentansprüche

1. Verfahren zur Herstellung eines stoßfesten, thermoplastischen, mit einem Latex-Elastomer modifizierten Harzes.
Das Verfahren umfaßt folgende Reaktionsstufen:
(a) eine erste Reaktionsstufe, in der man in Gegen-` wart eines ionischen Tensids in wäßriger Emulsion ein Latex-Elastomer wenigstens eines ethylensich ungesättigten Monomers herstellt;
(b) eine zweite Reaktionsstufe,
(b1) in der man dem so erhaltenen Latex wenigstens ein vinylisches Monomer, das wasserunlöslich ist oder nur schwach wasserlöslich ist und aus den Alkylmethacrylaten, dem Styrol, den substituierten Styrolen, dem Acrylonitril und dem Methacrylonitril ausgewählt wird und gegebenenfalls wenigstens ein monoethylenisch ungesàttigtes, zur Copolymerisation fähiges Monomer zugibt.
(b2) in der man stoechiometrisch die ionischen, stabilisierenden Ladungen des genannten Latex neutralisiert, indem man dem System Latex + Monomer(e) ein Ubertragungsmittel zugibt, das zum Tensid, das in der Reaktionsstufe (a) benutzt wurde, entgegengesetzte ionische Ladungen aufweist, um damit die Überführung der Teilchen des genannten Latex in das genannte (oder in die genannten) vinylische(n) Monomer(e) vorzunehmen, wobei das genannte Übertragungsmittel ein ionisches Tensid ist, das, im Vergleich zu dem Tensid aus der Reaktionsstufe (a), entgegengesetzte Ladungen aufweist, oder, je nachdem, ein Polyanion oder Polykation und/oder ein in Gegenwart eines Tensids, das zu dem im Reaktionsschritt (a) eingesetzten Tensid entgegengesetzt geladen ist, synthetisierter Latex ist.
(c) eine dritte Reaktionsstufe, in der man die Suspensions- oder Massenpolymerisation in der Phase, die aus dem genannten (oder den genannten) Monomer(en) der Reaktionsstufe (b) besteht und die überführten Latexteilchen enthält, ausführt.

2. Verfahren nach Anspruch 1, dadurch gekennzeichnet, daß man die Mengen der verschiedenen, eingesetzten Monomere so wählt, daß das hergestellte thermoplastische Harz 1 bis 90 Gew.% an Elastomerbestandteil enthält.

3. Verfahren nach einem der Ansprüche 1 und 2, dadurch gekennzeichnet, daß man der Reaktionsstufe (a) eine zusätzliche Stufe (a1) folgen läßt, die aus einer Emulsionspolymerisation des in der Reaktionsstufe (a) erhaltenen Latex mit wenigstens einem monoethylenisch ungesättigten Monomeren besteht, das auch verträglich machendes Monomeres genannt wird und der chemischen Familie des in Reaktionsstufe (b) eingeführten Monomeren angehört.

4. Verfahren nach Anspruch 3, dadurch gekennzeichnet, daß man für die Polymerisation der Reaktionsstufe (a1) ein (oder mehrere) verträglich machendes (machende) Monomer(e), das (die) die gleiche chemische Natur wie das (die) in der Reaktionsstufe (b) benutzte (n) Monomer (e) aufweist (aufweisen), benutzt.

5. Verfahren nach einem der Ansprüche 3 und 4, dadurch gekennzeichnet, daß man in der Reaktionsstufe (a1) für 100 Gewichtsteile der Mischung Latex + verträglich machendes (machende) Monomer(e) von 99 bis 15 Gewichtsteile des Feststoffanteils des genannten Latex und von 1 bis 85 Gewichtsteile des (oder der) genannten verträglich machenden Monomers (Monomere) einsetzt.

6. Verfahren nach einem der Ansprüche 1 bis 5, dadurch gekennzeichnet, daß in der Reaktionsstufe (a) und/oder der Reaktionsstufe (a1) dem (den) eingesetzten Monomer(en) ein Pfropf - monomer in einer Menge bis zu 10 Gewichtsteilen für 100 Gewichtsteile des (oder der) genannten Monomers (Monomere) zugefügt wird.

7. Verfahren nach einem der Ansprüche 1 bis 6, dadurch gekennzeichnet, daß man dem (den) Monomer(en) in der Reaktionsstufe (a) wenigstens ein vernetzungsfähiges Monomer in einer Menge bis zu 20 Gewichtsteilen für 100 Gewichtsteile des (oder der) genannten Monomers (Monomeren) zufügt und gegebenenfalls in der Reaktionsstufe (a1), falls eine solche Stufe vorgesehen ist, man dem (den) Monomer(en) aus dieser Reaktionsstufe wenigstens. ein vernetzungsfähiges Monomer in einer Menge bis zu 5 Gewichtsteilen für 100 Gewichtsteile des (oder der) genannten Monomers (Monomeren) aus dieser Reaktionsstufe zufügt.

8. Verfahren nach einem der Ansprüche 1 bis 7, dadurch gekennzeichnet, daß man in der Reaktionsstufe (b) wenigstens 10 Gewichtsteile des (oder der) Monomers (Monomeren) für 100 Gewichtsteile des Feststoffanteils des gegen Ende der Reaktionsstufe (a) oder (a1) erhaltenen Latex einsetzt.

9. Verfahren nach einem der Ansprüche 1 bis 8, dadurch gekennzeichnet, daß, falls man ein kationisches Tensid als Übertragungsmittel einsetzt, dieses aus den quaternären Oniumsalzen mit einem hydrophobierenden Substituenten oder aus den Oniumsalzen, die einen sterisch gehinderten Substituenten aufweisen, ausgewählt wird. Falls ein Polykation als Übertragungsmittel benutzt wird, wählt man es aus den Derivaten quaternärer Polyvinylpyridinen, quaternärer Polyvinylbenzylaminen, quaternärer Zellulosen, quaternärer Polyvinylalkoholen und quaternärer Polyalkylmethacrylaten.

10. Verfahren nach einem der Ansprüche 1 bis 8, dadurch gekennzeichnet, daß man einen Latex als Übertragungsmittel benutzt, wobei genannter Latex aus Monomeren erhalten wurde, die die gleiche chemische Natur wie die Monomere aus der Reaktionsstufe (b) aufweisen.

11. Verfahren nach einem der Ansprüche 1 bis 10, dadurch gekennzeichnet, daß man in der Reaktionsstufe (b) das Monomer, das die übertragenen Teilchen enthält, mit Hilfe eines Dispergierungsmittels im Hinblick auf eine Suspensionspolymerisation in Reaktionsstufe (c) dispergiert.

12. Verfahren nach einem der Ansprüche 1 bis 11, dadurch gekennzeichnet, daß man die Übertragung in der Reaktionsstufe (b) bei einer Temperatur von 0 bis 100°C ausführt.
